# EUROPÄISCHE PATENTSCHRIFT

(11) **EP 3 365 172 B1**
(45) Veröffentlichungstag und Bekanntmachung des Hinweises auf die Patenterteilung: **09.08.2023**
(21) Anmeldenummer: 16787376.9
(22) Anmeldetag: 19.10.2016
(51) Int. Cl.: B21D 26/051, B21D 26/053, C22C 38/08, F16L 9/02, F16L 58/08, B32B 15/01, B21C 37/15, B32B 1/08, C22C 38/04, C22C 38/18, C22C 38/34, C22C 38/38, C22C 38/40, C22C 38/58

(54) **VERBUNDROHR BESTEHEND AUS EINEM TRÄGERROHR UND MINDESTENS EINEM SCHUTZROHR UND VERFAHREN ZUR HERSTELLUNG DAVON**
COMPOSITE PIPE CONSISTING OF A CARRIER PIPE AND AT LEAST ONE PROTECTIVE PIPE, AND METHOD FOR THE PRODUCTION THEREOF
TUBE COMPOSITE CONSTITUÉ D'UN TUBE DE SUPPORT ET D'AU MOINS UN TUBE DE PROTECTION ET PROCÉDÉ DE FABRICATION ASSOCIÉ

(30) Priorität: 21.10.2015 DE 102015117956
(43) Veröffentlichungstag der Anmeldung: 29.08.2018
(73) Patentinhaber: Salzgitter Flachstahl GmbH, 38239 Salzgitter (DE)
(72) Erfinder: PALZER, Peter, 38704 Liebenburg (DE); KÖHLER, Kai, 31171 Nordstemmen (DE); DEBEAUX, Marc, 31135 Hildesheim (DE); GEORGEOU Zacharias, 38100 Braunschweig (DE)
(74) Vertreter: Moser Götze & Partner Patentanwälte mbB
(86) Internationale Anmeldenummer: PCT/EP2016/075137
(87) Internationale Veröffentlichungsnummer: WO 2017/068008

(56) Entgegenhaltungen:
- EP-A1- 1 427 866
- WO-A1-98/25712
- WO-A1-2006/048034
- DE-A1-102010 034 161
- DE-B3-102007 011 868
- GB-A- 2 085 330

## Beschreibung

Die Erfindung betrifft ein Verbundrohr bestehend aus einem Trägerrohr und mindestens einem Schutzrohr, bei dem das Trägerrohr aus einem nicht korrosionsbeständigen Stahl hergestellt ist. Auch betrifft die Erfindung ein Verfahren zur Herstellung eines Verbundrohrs bestehend aus einem Trägerrohr und mindestens einem Schutzrohr.

Es ist allgemein bekannt, dass plattierte Rohre Verbundbauteile sind, bei denen durch eine Kombination verschiedener Werkstoffe Vorteile in technischer und wirtschaftlicher Hinsicht erreicht werden. Eine übliche Kombination besteht aus Plattierungswerkstoffen mit guten verschleißfesten und/oder korrosionsbeständigen Eigenschaften und Werkstoffen für das Grund- beziehungsweise Trägerrohr mit guten mechanischen Eigenschaften. Eine Wirtschaftlichkeit dieser Verbundbauteile ergibt sich daraus, dass die Dicke der zumeist sehr teuren Plattierungswerkstoffe auf das für den jeweiligen Einsatzzweck technisch notwendige Maß reduziert werden kann und die Stabilität des Verbundrohres über den zumeist günstigeren Werkstoffs des Grund- beziehungsweise Trägerrohrs erzielt wird.

Aus der deutschen Offenlegungsschrift DE 30 39 428 A1 ist bereits ein Verfahren zur Herstellung plattierter Stahlrohre bekannt, die aus einer Grundwand und einer Außen- und/oder Innenwand bestehen. Je nach Aufbau des Stahlrohres in zwei- oder dreiwandiger Form kann die Grundwand als Innen-, Außen- oder Zwischenwand dienen. Derartige mehrwandige Stahlrohre kommen üblicherweise in korrosiven oder abrasiven Umgebungen zum Einsatz und können kostengünstig hergestellt werden, da nur die Wand oder die Wände, die mit dem korrosiven beziehungsweise abrasiven Medien in Kontakt kommen, aus einem entsprechend teureren, korrosionsbeständigen Schutzmetall hergestellt werden. Als Schutzmetalle werden abriebfester Stahl (kohlenstoffreicher abriebfester Stahl und abriebfester Manganstahl), nichtrostender Stahl, Nickel, Nickellegierungen, Titan, Titanlegierungen, Kupfer, Kupferlegierungen, Chrom, Chromlegierungen, Aluminium und Aluminiumlegierungen genannt. Als Grundmetalle für die Grundwand sind Kohlenstoffstahl, legierter Stahl, nichtrostender Stahl (martensitischer Stahl, austenitischer Stahl, ausscheidungsgehärteter Stahl und nichtrostender Chrom-Mangan-Stahl) und Nickellegierungen aufgeführt. Für die Herstellung eines plattierten Stahlrohres mit einer Innenwand aus korrosionsbeständigem Schutzmetall wird in ein Grundrohr aus einem Grundmetall ein Innenrohr aus Schutzmetall eingeschoben. Der Innendurchmesser des Grundrohrs und der Außendurchmesser des Innenrohrs sind so gewählt, dass das Innenrohr sich leicht einschieben lässt. Zuvor sind die Außenfläche des Innenrohrs und die Innenfläche des Außenrohrs gereinigt worden, beispielsweise über Polieren oder eine Säurewäsche. Anschließend werden das Innenrohr und das Außenrohr über eine Reduktion und ein- oder mehrstufiges Kaltziehen auf einer Kaltziehbank miteinander mechanisch verbunden. Anschließend wird das kaltgezogene Rohr in einem Vorwärmofen erhitzt und zu einem Endrohr warmgewalzt und gegebenenfalls anschließend kaltgewalzt. Über das Warmwalzen erfolgt eine metallurgische Verbindung von Innen- und Außenrohr. Um ein Eindringen von Luft zwischen dem Innenrohr und dem Außenrohr zu vermeiden, wird vorzugsweise eine Auftragsschweißung an den Stirnflächen des kaltgezogen Rohres vorgenommen. Wenn das Innenrohr einen höheren Wärmeausdehnungskoeffizienten als das Außenrohr hat, kann eine Auftragsschweißung entfallen. Dies ist der Fall, wenn das Innenrohr aus Kohlenstoffstahl und das Außenrohr aus ferritischem nichtrostendem Stahl besteht.

Des Weiteren ist in der europäischen Patentschrift EP 0 944 443 B1 bereits ein Verfahren zum Herstellen von innenplattierten Rohren mit einem Außen- und einem Innenrohr beschrieben. Die Rohre sind zum Transport von korrosiven und/oder abrasiven Fluiden vorgesehen. Hierbei besteht das Außenrohr aus einem Kohlenstoffstahl oder einem anderen höherfesten metallischen Werkstoff, insbesondere einem martensitischen Chromstahl, einem Duplexstahl oder einem austenitischen Edelstahl. Das Innenrohr ist aus einem korrosionsbeständigen und/oder verschleißfesten metallischen Werkstoff, insbesondere einem martensitischen Chromstahl, einem Duplexstahl oder einem ferritischen oder austenitischen Edelstahl, Titan, einer Titanlegierung oder einer Nickelbasislegierung hergestellt. Zwischen dem Außenrohr und dem Innenrohr wird im Sinne einer Presspassung durch mechanisches Aufschrumpfen ein kraftschlüssiger Verbund geschaffen, indem der Durchmesser des Außenrohrs reduziert wird. Hierfür wird das Außenrohr gemeinsam mit dem Innenrohr durch einen Reduzierring hindurch gezwungen. Insbesondere ist hierbei das Außenrohr nur so weit reduziert, dass die hierdurch bedingte mechanische Verformung des Innenrohrs noch im elastischen Bereich bleibt. Ein weiteres Verbundrohr ist in der Offenlegungsschrift WO 98/25712 offenbart.

Auch werden in dieser europäischen Patentschrift unterschiedliche bekannte Verfahren beschrieben, um ein Innen- und ein Außenrohr zu einem Verbundrohr miteinander zu verbinden. Grundsätzlich wird zwischen einer mechanischen Verbindung - sogenannte klangfeste Verbindungen - und einer metallurgischen Verbindung unterschieden. Verbundrohre mit einer metallurgischen Verbindung werden durch Warmumformung, beispielsweise durch Coextrudieren, Walzplattieren, heißisostatisches Pressen, Sprengplattieren oder Schweißplattieren, hergestellt. Hierbei kann nachteilig sein, dass eine etwaige erforderliche Wärmebehandlung nicht optimal auf beide Werkstoffe des Verbundrohres abgestimmt werden kann. Verbundrohre mit einer mechanischen Verbindung werden beispielsweise durch hydraulisches Aufweiten des Innenrohrs mit oder ohne gleichzeitigem Erwärmen des Außenrohres, Aufweiten des Innenrohrs mit einem Ziehstopfen oder durch das zuvor beschriebene Reduzieren des Außenrohres durch einen Ziehring hergestellt. Üblicherweise weist die Herstellung von Verbundrohren mittels mechanischer Verbindung geringere Herstellkosten auf als die Herstellung von Verbundrohren mittels metallurgischer Verbindung. Bei Verbundrohren mittels mechanischer Verbindung ist zu gewährleisten, dass in die Zone zwischen Innen- und Außenrohr keine Feuchtigkeit eindringt, die zu Korrosion führen könnte.

Die vorbekannten Lösungen weisen den Nachteil auf, dass aufgrund der gewählten Ausgangswerkstoffe, nur Grundrohre beziehungsweise Trägerrohre mit einem begrenzten Umformvermögen gefertigt werden beziehungsweise hochlegierte Stähle mit hohen Cr- und/oder Ni-Anteilen für ein besseres Umformvermögen verwendet werden müssen, was höhere Kosten nach sich zieht.

Hiervon ausgehend liegt der vorliegenden Erfindung die Aufgabe zu Grunde, ein weiteres Verbundrohr für den Einsatz in korrosiver Umgebung bestehend aus einem Trägerrohr und mindestens einem Schutzrohr und ein weiteres Verfahren zur Herstellung dieses Verbundrohrs zu schaffen, das sich insbesondere durch geringe Herstellkosten auszeichnet.

Diese Aufgabe wird durch ein Verbundrohr mit den Merkmalen der Ansprüche 1 und 2 und ein Verfahren zur dessen Herstellung gemäß Anspruch 11 gelöst. Vorteilhafte Ausgestaltungen der Erfindung sind in den Unteransprüchen 3 bis 10 und 12 angegeben.

Erfindungsgemäß wird ein weiteres Verbundrohr bestehend aus einem Trägerrohr und mindestens einem Schutzrohr, wobei das mindestens eine Schutzrohr aus einem korrosionsbeständigen beziehungsweise korrosionsträgen Stahl hergestellt ist und bei dem das Trägerrohr aus einem nicht korrosionsbeständigen Stahl hergestellt ist, der zumindest ein teilaustenitisches Gefüge aufweist und der bei Einwirkung mechanischer Spannungen einen TRIP- und/oder TWIP-Effekt aufweist, dadurch geschaffen, dass der Stahl des Trägerrohrs ausfolgender chemischer Zusammensetzung (in Gew.-%) besteht: C: 0,005 bis 1,4; Mn: 5 bis 35; Rest Eisen einschließlich unvermeidbarer stahlbegleitender Elemente, mit optionaler Zulegierung folgender Elemente (in Gew.-%): Ni: 0 bis 6; Cr: 0 bis 9; Al: 0 bis 15; Si: 0 bis 8; Mo: 0 bis 3; Cu: 0 bis 4; V: 0 bis 2; Nb: 0 bis 2; Ti: 0 bis 2; Sb: 0 bis 0,5; B: 0 bis 0,5; Co: 0 bis 5; W: 0 bis 3; Zr: 0 bis 4; Ca: 0 bis 0,1; P: 0 bis 0,6; S: 0 bis 0,2; N: 0,002 bis 0,3.

Erfindungsgemäß wird ein weiteres Verbundrohr bestehend aus einem Trägerrohr und mindestens einem Schutzrohr, wobei das mindestens eine Schutzrohr aus einem korrosionsbeständigen beziehungsweise korrosionsträgen Stahl hergestellt ist und bei dem das Trägerrohr aus einem nicht korrosionsbeständigen Stahl hergestellt ist, der zumindest ein teilaustenitisches Gefüge aufweist und der bei Einwirkung mechanischer Spannungen einen TRIP- und/oder TWIP-Effekt aufweist, dadurch geschaffen, dass der Stahl des Trägerrohrs aus folgender chemischer Zusammensetzung (in Gew.-%) besteht: C: 0,005 bis 0,9, bevorzugt 0,01 bis < 0,3; Mn: mehr als 4,0 bis 12, bevorzugt 4 bis 8; Rest Eisen einschließlich unvermeidbarer stahlbegleitender Elemente, mit optionaler Zulegierung von einem oder mehreren der folgenden Elemente (in Gewichts-%): Al: 0 bis 10, bevorzugt 0,03 bis 0,8; Si: 0 bis 6, bevorzugt 0,02 bis 0,8; Cr: 0 bis 6, bevorzugt 0,05 bis 4; Nb: 0 bis 1,5, bevorzugt 0,003 bis 0,1; V: 0 bis 1,5, bevorzugt 0,006 bis 0,1; Ti: 0 bis 1,5, bevorzugt 0,002 bis 0,5; Mo: 0 bis 3, bevorzugt 0,01 bis 0,8; Cu: 0 bis 3, bevorzugt 0,05 bis 2; Sn: 0 bis 0,5; W: 0 bis 5, bevorzugt 0,03 bis 2; Co: 0 bis 8, bevorzugt 0,003 bis 3; Zr: 0 bis 1, bevorzugt 0,03 bis 0,5; B: 0 bis 0,15, bevorzugt 0,002 bis 0,02; P: max. 0,1, insbesondere <0,04; S: max. 0,1, insbesondere <0,02; N: max. 0,1, insbesondere <0,05; Ca bis 0,1.

Der Stahl des Trägerrohrs weist den bekannten temperaturabhängigen TRIP (Transformation Induced Plasticity) - bzw. TWIP (Twinning Induced Plasticity) -Effekt auf, der eine enorme Steigerung der Kaltumformbarkeit des Stahls beim Umformen des Rohres ermöglicht. Diese Effekte treten bei hochlegierten zumindest teilaustenitischen oder hochmanganhaltigen Stählen auf und sind bei plastischer Verformung des Stahls durch die Bildung von Verformungsmartensit (TRIP-Effekt) oder durch Zwillingsbildung bei der Verformung (TWIP-Effekt) gekennzeichnet. Derartige TRIP- und TWIP-Stähle sowie Stähle mit mehrphasigem Gefüge weisen eine hervorragende Kombination von Festigkeit, Dehnungs- und Zähigkeitseigenschaften auf. Der TRIP- und/oder TWIP-Effekt bewirkt, dass während der Rohrumformung (beispielsweise durch Rohrziehen oder Innenhochdruckumformung) eine Verfestigung des Trägerrohres bei gleichzeitig verbessertem Umformvermögen stattfindet. Durch die Zunahme an Festigkeit kann das Rohr in geringerer Wandstärke ausgelegt werden, wodurch Material und Kosten gespart werden.

Vorzugsweise ist das Trägerrohr aus einem Stahl hergestellt, der ein Gefüge mit einem Austenitgehalt von 5 bis 100 % aufweist.

Der vorliegenden Erfindung liegt die Idee zu Grunde, Verbundrohre mit Trägerrohren auf der Basis von höher manganhaltigen Stählen, vorzugsweise unter Aluminium- und Silizium-Zugabe herzustellen, die an sich nicht korrosionsbeständig sind. Das Gefüge dieser Stähle ist zumindest teilaustenitisch und zeichnet sich besonders durch eine hohe Festigkeit bei gleichzeitig hoher Dehnung und Zähigkeit aus. Derartige Stähle sind unter anderem im Bandgießverfahren herstellbar. Eine Verringerung der Dicke des Trägerrohrs durch die sehr hohen erreichbaren Festigkeiten ist möglich, wodurch Ressourcen eingespart und der ökologische Fußabdruck verbessert, sowie ein Leichtbaupotenzial ermöglicht wird. Das Zulegieren von Aluminium- und Silizium reduziert des Weiteren die spezifische Dichte und ermöglicht dadurch ein zusätzliches Leichtbaupotenzial.

Derartige Trägerrohre bilden eine hervorragende Basis für Verbundrohre, die im Sinne von plattierten Rohren zur Förderung korrosiver Medien und/oder zur Verwendung unter korrosiven Bedingungen eigesetzt werden können. Diese Verbundrohre können unter großen mechanischen Beanspruchungen (Zugkräfte, Druckbelastung, Biegebelastung usw.) und insbesondere auch im Tieftemperaturbereich verwendet werden.

Vorzugsweise weist das Verbundrohr eine mechanische Verbindung zwischen dem Trägerrohr und dem Schutzrohr beziehungsweise den Schutzrohren auf.

Die Schutzrohre sind bevorzugt aus einem korrosionsbeständigen bzw. korrosionsträgen Stahl (insbesondere CrNi, CrMn, CrMnNi, CrMnN, FeCr, AlCroMaSt) oder einer Nickelbasislegierung hergestellt. Der Stahl des Schutzrohres kann ebenfalls ein zumindest teilaustenistisches Gefüge und/oder einen TRIP- und/oder TWIP-Effekt sowie optional einen erhöhten Widerstand gegen abrasiven Verschleiß aufweisen. Vorzugsweise weist das Schutzrohr ein vollaustenitisches Gefüge auf. Durch eine vorteilhafte Kombination dieses Schutzrohres als Innenrohr mit einem Trägerrohr als Außenrohr aus einer Legierung mit TRIP-Effekt kann der Effekt der Volumenzunahme des Außenrohrs durch den TRIP-Effekt vorteilhaft genutzt werden, um das Außenrohr dicht mit dem Innenrohr zu verbinden.

Gegenteilig kann bei einem austenitischen Trägerrohr als Außenrohr und einem ein- oder mehrphasigen nicht vollaustenitischen Schutzrohr als Innenrohr der Effekt der größeren Rückfederung von Austeniten in der Art und Weise genutzt werden, dass das austenitische Trägerrohr mit einem geringeren E-Modul als das Schutzrohr als Innenrohr nach einer gemeinsamen Aufweitung stärker rückfedert und sich dadurch dicht mit dem inneren Schutzrohr verbindet.

Des Weiteren kann eine gezielte Gefügeumwandlung vorteilhaft genutzt werden, indem ein austenitisches korrosionsbeständiges Schutzrohr auf oder in ein austenitisiertes, bei Raumtemperatur mehrphasiges, Trägerrohr mit einer Temperatur oberhalb der Ac1-Temperatur aufgebracht bzw. eingefügt wird, welches bei der Abkühlung eine zumindest teilweise Phasenumwandlung von einer kubisch-flächenzentrierten (Austenit) in eine kubisch raumzentrierte Phase (Ferrit/Martensit/Bainit) mit einer daraus resultierenden Volumenzunahme durchläuft. Die Volumenzunahme bewirkt ein dichtes Anpressen an das austenitische Schutzrohr.

Der Innendurchmesser des außen liegenden Rohres ist dabei jeweils geringfügig größer als der Außendurchmesser des inneren Rohres.

Diese Schutzrohre können in Verbindung mit dem höher manganhaltigen Stahl des Trägerrohres im Vergleich zu einem konventionell hergestellten mechanisch plattierten Rohr material- und kostensparend hergestellt werden, wobei das Verbundrohr außergewöhnlich gute mechanische Eigenschaften hinsichtlich Druck- und Biegebelastungen erreicht.

In einer erfindungsgemäßen Ausgestaltung weist das Schutzrohr folgende chemische Zusammensetzung (in Gew.-%) auf: C: 0,005 bis 0,8; Cr: 7 bis 30; Rest Eisen einschließlich unvermeidbarer stahlbegleitender Elemente, mit optionaler Zulegierung folgender Elemente (in Gew.-%): Ni: 0 bis 15; Mn: 0 bis 25; Al: 0 bis 15; Si: 0 bis 8; Mo: 0,01 bis 3; Cu: 0,005 bis 4; V: 0 bis 2; Nb: 0 bis 2;Ti: 0 bis 2; Sb: 0 bis 0,5; B: 0 bis 0,5; Co: 0 bis 5; W: 0 bis 3; Zr: 0 bis 4; Ca: 0 bis 0,1; P: 0 bis 0,6; S: 0 bis 0,2; N: 0,002 bis 0,3.

In einer zweiten erfindungsgemäßen Ausgestaltung weist das Schutzrohr folgende chemische Zusammensetzung (in Gew.-%) auf: Cr: 7 bis 20; Mn: 2 bis 9; Ni: bis zu 9; C: 0,005 bis 0,4; N: 0,002 bis 0,3; Rest Eisen einschließlich unvermeidbarer stahlbegleitender Elemente, mit optionaler Zulegierung folgender Elemente (in Gew.-%): Al: 0 bis 3; Si: 0 bis 2; Mo: 0,01 bis 3; Cu: 0,005 bis 4; V: 0 bis 2; Nb: 0 bis 2; Ti: 0 bis 2; Sb: 0 bis 0,5; B: 0 bis 0,5; Co: 0 bis 5; W: 0 bis 3; Zr: 0 bis 2; Ca: 0 bis 0,1; P: 0 bis 0,6; S: 0 bis 0,2.

In einer dritten erfindungsgemäßen Ausgestaltung weist das Schutzrohr folgende chemische Zusammensetzung (in Gew.-%) auf: Mn: 5 bis 30, C: 0.01 bis 0.8, Al: 4 bis 10, Cr: 2 bis 10, Si: 0 bis 3.5, Rest Eisen einschließlich unvermeidbarer stahlbegleitender Elemente, mit optionaler Zulegierung folgender Elemente (in Gew.-%): Co: 0 bis 5; W: 0 bis 3, Ca: 0 bis 0,1; P: 0 bis 0,6; S: 0 bis 0,2, Cu: 0,005 bis 4, Sb: 0 bis 0,5 sowie optional jeweils bis zu 1 Gew.-% eines oder mehrerer Elemente aus der Gruppe der folgenden Elemente Zr, Ti, V, Nb, B, Mo, Ni, N, seltene Erden.

In einer Ausgestaltung besteht das Schutzrohr aus einer Nickelbasislegierung Vorzugweise weist das Trägerrohr eine Zugfestigkeit von mindestens 800 MPa und eine Bruchdehnung von mindestens 15 % auf.

Erfindungsgemäß wird ein weiteres Verfahren zur Herstellung eines Verbundrohrs bestehend aus einem Trägerrohr und mindestens einem Schutzrohr unter Verwendung eines vorbeschriebenen Trägerrohrs, dadurch geschaffen, dass das Trägerrohr und das mindestens eine Schutzrohr mechanisch oder metallurgisch miteinander verbunden werden. Des Weiteren werden das Trägerrohr und das mindestens eine Schutzrohr mechanisch durch Aufschrumpfen, einen Reduzierring oder gemeinsames Aufweiten beziehungsweise metallurgisch durch Diffusionsglühen, Spreng- oder Walzplattieren miteinander verbunden.

Vorzugsweise wird hierbei das Trägerrohr im Verbund mit dem mindestens einen Schutzrohr umgeformt.

Legierungselemente werden dem Stahl in der Regel zugegeben, um gezielt bestimmte Eigenschaften zu beeinflussen. Dabei kann ein Legierungselement in verschiedenen Stählen unterschiedliche Eigenschaften beeinflussen. Die Wirkung und Wechselwirkung hängt im Allgemeinen stark von der Menge, der Anwesenheit weiterer Legierungselemente und dem Lösungszustand im Werkstoff ab. Die Zusammenhänge sind vielseitig und komplex. Im Folgenden soll auf die Wirkung der Legierungselemente in dem Stahl des Trägerrohrs näher eingegangen werden. Nachfolgend werden die positiven Effekte der erfindungsgemäß verwendeten Legierungselemente beschrieben:
Die Verwendung des Begriffs "bis" in den Definition der Gehaltsbereiche, wie beispielsweise 5 bis 35 Gew.-%, bedeutet, dass die Eckpunkte - im Beispiel 5 und 35 - mit eingeschlossen sind.

Kohlenstoff C: Wird benötigt zur Bildung von Karbiden, stabilisiert den Austenit und erhöht die Festigkeit. Höhere Gehalte an C verschlechtern die Schweißeigenschaften und führen in dem Stahl zur Verschlechterung der Dehnungs- und Zähigkeitseigenschaften, weshalb ein maximaler Gehalt von 1,4 Gew.-% festgelegt wird. Um eine ausreichende Festigkeit des Werkstoffs zu erreichen, ist eine Mindestzugabe von 0,005 Gew.-% vorgesehen.

Mangan Mn: Mn stabilisiert den Austenit, erhöht die Festigkeit und die Zähigkeit und ermöglicht eine verformungsinduzierte Martensit- und/oder Zwillingsbildung in dem Stahl des Trägerrohrs. Gehalte kleiner 5 Gew.-% sind nicht ausreichend zur Stabilisierung des Austenits und verschlechtern somit die Dehnungseigenschaften. Für den Manganstahl des Trägerrohrs wird ein Bereich von 5 bis 35 Gew.-% bevorzugt.

Nickel Ni: Ni stabilisiert den Austenit und verbessert die Dehnungseigenschaften insbesondere bei niedrigen Anwendungstemperaturen, weshalb optional ein Maximalgehalt von 6,0 Gew.-% festgelegt, wobei ein Gehalt von 1 bis 4 Gew.-% bevorzugt wird.

Chrom Cr: Verbessert die Festigkeit und verringert die Korrosionsrate, verzögert die Ferrit- und Perlitbildung und bildet Karbide. Der maximale Gehalt wird optional mit 9 Gew.-% festgelegt, da höhere Gehalte eine Verschlechterung der Dehnungseigenschaften zur Folge haben. Bevorzugt wird ein Gehalt an Cr von 0,5 bis 5 Gew.-% zulegiert.

Aluminium AI: AI wird zur Desoxidation von Stählen genutzt. Des Weiteren verbessert ein Al-Gehalt vorteilhaft die Festigkeits- und Dehnungseigenschaften, verringert die spezifische Dichte und beeinflusst das Umwandlungsverhalten der erfindungsgemäßen Legierung positiv. Optional wird ein maximaler Gehalt von 15 Gew.-% festgelegt. Bevorzugt wird ein Gehalt an AI von 0,5 bis 11 Gew.-% zulegiert.

Silizium Si: Behindert die Kohlenstoffdiffusion, verringert die spezifische Dichte und erhöht die Festigkeit und die Dehnungs- sowie Zähigkeitseigenschaften. Optional wird ein maximaler Gehalt auf 8 Gew.-%, bevorzugt ein Gehalt von 0,3 bis 5 Gew.-%, festgelegt.

Molybdän Mo: Wirkt als starker Karbidbildner und erhöht die Festigkeit. Gehalte an Mo von über 3 Gew.-% verschlechtern die Dehnungseigenschaften, weshalb optional ein Maximalgehalt von 3 Gew.-%, bevorzugt ein Gehalt von 0,01 bis 1,8 Gew.-% festgelegt wird.

Kupfer Cu: Verringert die Korrosionsrate und steigert die Festigkeit. Gehalte oberhalb 4 Gew.-% verschlechtern die Herstellbarkeit durch Bildung niedrig schmelzender Phasen beim Vergießen und Warmwalzen weshalb optional ein Maximalgehalt von 4 Gew.-% bevorzugt ein Gehalt von 0,005 bis 3 Gew.-% festgelegt wird.

Typische Mikrolegierungselemente sind Vanadium, Niob und Titan. Diese Elemente können im Eisengitter gelöst werden und bilden mit Kohlenstoff und Stickstoff Karbide, Nitride und Karbonitride.

Vanadium V und Niob Nb: Diese wirken insbesondere durch die Bildung von Karbiden kornfeinend, wodurch gleichzeitig die Festigkeit, Zähigkeit und Dehnungseigenschaften verbessert werden. Optional wird ein Maximalgehalt von jeweils 2 Gew.-%, bevorzugt ein Gehalt von 0,004 bis 1 Gew.-%, festgelegt.

Titan Ti: Wirkt als Karbidbildner kornfeinend, wodurch gleichzeitig die Festigkeit, Zähigkeit und Dehnungseigenschaften verbessert werden und vermindert die interkristalline Korrosion. Optional wird ein Maximalgehalt auf 2 Gew.-%, bevorzugt ein Gehalt von 0,005 bis 1,2 Gew.-%, festgelegt.

Antimon Sb: Antimon verringert die C-, N-, O- und Al-Diffusion, wodurch insbesondere Karbide, Nitride und Karbonitride feiner ausgeschieden werden. Dadurch werden sowohl die effektive Ausnutzung dieser Legierungselemente verbessert, was die Wirtschaftlichkeit erhöht und den Ressourcenverbrauch senkt, als auch die Festigkeits-, Dehnungs- und Zähigkeitseigenschaften verbessert. Gehalte oberhalb 0,5 Gew.-% führen zur unerwünschten Ausscheidung von Sb an den Korngrenzen und somit zur Verschlechterung der Dehnungs- und Zähigkeitseigenschaften. Daher wird optional ein Maximalgehalt auf 0,5 Gew.-% , bevorzugt ein Gehalt von 0,003 bis 0,2 Gew.-% festgelegt.

Bor B: Bor verbessert die Festigkeit und stabilisiert den Austenit. Optional wird ein Maximalgehalt auf 0,5 Gew.-%, bevorzugt ein Gehalt von 0,0003 bis 0,1 Gew.-%, festgelegt.

Kobalt Co: Kobalt erhöht die Festigkeit des Stahls, stabilisiert den Austenit und verbessert die Warmfestigkeit. Gehalte von über 5 Gew.-% verschlechtern die Dehnungseigenschaften in den erfindungsgemäßen Legierungen, weshalb optional ein Maximalgehalt von 5 Gew.-%, bevorzugt ein Gehalt von 0,01 bis 3 Gew.-%, festgelegt wird.

Wolfram W: Wolfram wirkt als Karbidbildner und erhöht die Festigkeit und Warmfestigkeit. Gehalte an W von über 3 Gew.-% verschlechtern die Dehnungseigenschaften, weshalb optional ein Maximalgehalt von 3 Gew.-%, bevorzugt ein Gehalt von 0,1 bis 2 Gew.-%, festgelegt wird.

Zirkonium Zr: Zirkonium wirkt als Karbidbildner und verbessert die Festigkeit. Gehalte an Zr von über 4 Gew-% verschlechtern die Dehnungseigenschaften, weshalb optional ein Maximalgehalt von 4 Gew.-%, bevorzugt ein Gehalt von 0,005 bis 2 Gew.-%, festgelegt wird.

Kalzium Ca: Kalzium wird zur Modifikation nichtmetallischer oxidischer Einschlüsse genutzt, welche sonst zu einem unerwünschten Versagen der Legierung durch Einschlüsse im Gefüge, welche als Spannungskonzentrationsstellen wirken und den Metallverbund schwächen, führen könnten. Des Weiteren verbessert Ca die Homogenität der erfindungsgemäßen Legierung. Gehalte von oberhalb 0,1 Gew.-% Ca bringen keinen weiteren Vorteil bei der Einschlussmodifikation, verschlechtern die Herstellbarkeit und sollten aufgrund des hohen Dampfdrucks von Ca in Stahlschmelzen vermieden werden. Daher wird optional ein Maximalgehalt auf 0,1 Gew.-% festgelegt.

Phosphor P: Ist ein Spurenelement aus dem Eisenerz und wird im Eisengitter als Substitutionsatom gelöst. Phosphor steigert durch Mischkristallverfestigung die Härte und verbessert die Härtbarkeit. Es wird allerdings in der Regel versucht, den Phosphorgehalt soweit wie möglich abzusenken, da er unter anderem durch seine geringe Diffusionsgeschwindigkeit stark seigerungsanfällig ist und in hohem Maße die Zähigkeit vermindert. Durch die Anlagerung von Phosphor an den Korngrenzen können Risse entlang der Korngrenzen beim Warmwalzen auftreten. Zudem setzt Phosphor die Übergangstemperatur von zähem zu sprödem Verhalten um bis zu 300 K herauf. Aus vorgenannten Gründen ist der Phosphorgehalt optional auf kleiner gleich 0,6 Gew.-%, bevorzugt von 0,0005 bis 0,1 Gew.-%, begrenzt.

Schwefel S: Ist wie Phosphor als Spurenelement im Eisenerz gebunden. Er ist im Stahl im Allgemeinen unerwünscht, da er zu starker Seigerung neigt und stark versprödend wirkt. Des Weiteren bildet Schwefel mit Mangan Mangansulfid (MnS), welches nach dem Walzen zeilig im Gefüge vorliegt und insbesondere die Dehnungs- und Zähigkeitseigenschaften verschlechtert. Es wird daher versucht, möglichst geringe Mengen an Schwefel in der Schmelze zu erreichen (z. B. durch eine Tiefvakuumbehandlung). Aus vorgenannten Gründen ist der Schwefelgehalt auf optional kleiner gleich 0,2 Gew.-% begrenzt.

Stickstoff N: N ist ebenfalls ein Begleitelement aus der Stahlherstellung. Er verbessert im gelösten Zustand bei höher manganhaltigen Stählen von größer gleich 5 Gew.-% Mn die Festigkeits- und Zähigkeitseigenschaften. Ein Abbinden des Stickstoffes in Form von Nitriden ist durch Zulegieren beispielsweise von Aluminium, Vanadium, Niob oder Titan möglich. Aus vorgenannten Gründen ist der Stickstoffgehalt optional auf kleiner gleich 0,3 Gew.-% bevorzugt auf 0,004 bis 0,2 Gew.-%, begrenzt.

Nachfolgend wird ein erfindungsgemäßes Verbundrohr 1 anhand einer Zeichnung näher erläutert. Es zeigen:

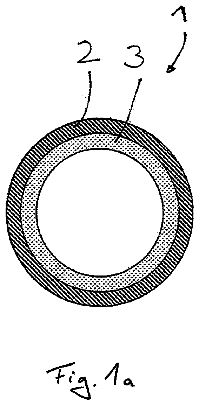

Figur 1a eine Schnittansicht eines Verbundrohres 1 in einer ersten Ausführungsform,

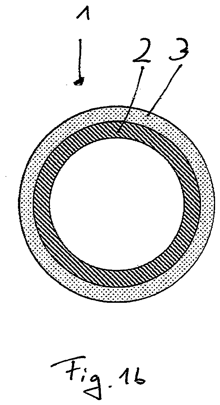

Figur 1b eine Schnittansicht eines Verbundrohres 1 in einer zweiten Ausführungsform und

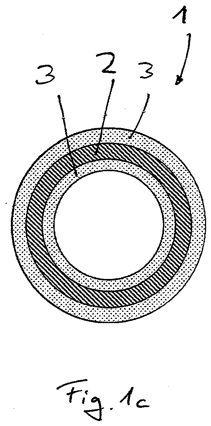

Figur 1c eine Schnittansicht eines Verbundrohres 1 in einer dritten Ausführungsform.

Ein gemäß der Erfindung hergestelltes Verbundrohr 1 besteht gemäß den Figuren 1a bis 1c aus einem Trägerrohr 2 und mindestens einem mechanisch hiermit verbundenen Schutzrohr 3. Das Schutzrohr 3 kann innen (siehe Figur 1a) oder außen (siehe Figur 1b) liegen. Auch eine Kombination mit einem Schutzrohr 3 innen und außen (siehe Figur 1c) ist möglich. Das Trägerrohr 2 besteht wie zuvor beschrieben aus einem höher manganhaltigen nicht korrosionsbeständigen Stahl; das Schutzrohr 3 aus einem korrosionsbeständigen bzw. korrosionsträgen Stahl. Dabei können das innere und äußere Schutzrohr 3 auch aus unterschiedlichen Werkstoffen bestehen. In dem Verbundrohr 1 gemäß Figur 1a kann ein korrosives Medium innerhalb des Schutzrohrs 3 des Verbundrohres 1 transportiert werden. Das Schutzrohr 3 ist hierbei vorteilhafter Weise so ausgeführt, dass seine Dicke alleine durch die Anforderung an dessen Korrosionsbeständigkeit erfolgt. Das Trägerrohr 2 kann durch Verwendung eines höher manganhaltigen Stahls mit einer deutlich reduzierten Wanddicke ausgeführt werden und gewährleistet auch so noch eine hohe Druck- und Biegefestigkeit im Vergleich zu einem herkömmlichen Trägerrohr 2 aus einem Kohlenstoffstahl. Daneben lassen sich durch die Erhöhung der Wanddicken der hoch manganhaltigen Trägerrohre 2 auch deutlich höhere Druckfestigkeiten, verglichen mit Kohlenstoffstahl basierten Trägerrohren 2, erreichen. Mit dem Verbundrohr 1 gemäß Figur 1b können nicht aggressive oder nicht korrodierende Medien innerhalb einer äußeren aggressiven oder korrosiven Umgebung gefördert werden.

Anstatt eines zweiten Schutzrohres 3 außen oder innen kann das Verbundrohr 1 aus Trägerrohr 2 und Schutzrohr 3 auch mit einer aktiven und/oder passiven Korrosionsschutzschicht versehen werden, beispielsweise in Form eines metallischen Überzugs (z.B. Zink-, Zinklegierungs-, Nickel- oder Chromschicht) oder einer anderweitigen organischen oder anorganischen Beschichtung bzw. Lackierung. Die Verbindung einzelner Rohrenden der Verbundrohre 1 miteinander kann über verschiedene Mittel beziehungsweise Verfahren wie beispielsweise Schweißen, Laserschweißen, Widerstandsschweißen, Kleben, Clinchen, Flansche, oder Gewindemuffen erfolgen.

Das Trägerrohr 2 wird mit dem beziehungsweise den Schutzrohren 3 in bekannter Weise metallurgisch oder mechanisch verbunden. Als metallurgische Verbindungsverfahren kommen beispielsweise Coextrudieren, Walzplattieren, heißisostatisches Pressen, Sprengplattieren oder Schweißplattieren in Frage. Als Verfahren für ein mechanisches Verbinden ist beispielsweise in Bezug auf eine Ausführungsform mit einem inneren Schutzrohr 3 hydraulisches Aufweiten des Schutzrohrs 3 mit oder ohne gleichzeitigem Erwärmen des Trägerrohres 2, Aufweiten des Schutzrohrs 3 mit einem Ziehstopfen oder Reduzieren des Trägerrohres 2 durch einen Ziehring zu denken. Vor dem mechanischen Verbinden werden das Trägerrohr 2 und das Schutzrohr 3 beziehungsweise die Schutzrohre 3 ineinandergeschoben. Hierbei weist das innere Schutzrohr 3 einen geringfügig kleineren Außendurchmesser auf als der Innendurchmesser des Trägerrohrs 2 beziehungsweise das äußere Schutzrohr 3 einen geringfügig größeren Innendurchmesser als der Außendurchmesser des Trägerrohrs 2 auf. Hierbei können das Schutzrohr 3 und das Trägerrohr 2 sowohl nahtlos, längsnahtgeschweißt als auch spiralnahtgeschweißt sein.

Die Erfindung ist vorstehend anhand von Verbundrohren 1 mit rundem Querschnitt beschrieben. Es ist selbstverständlich, dass diese Erfindung auch bei Verbundrohren 1 mit beliebigem Querschnitt (bspw. eckig, elliptisch oder sich über die Rohrlänge ändernder Querschnitt) sowie Rohren für das Innenhochdruckumformen (IHU) Anwendung findet.

Das erfindungsgemäß gefertigte Rohr kann in Bereichen mit korrosiven und/oder abrasiven Umgebungsbedingungen bzw. zur Förderung und zum Transport von korrosiven bzw. abrasiven Medien genutzt werden. Eine Anwendung ist insbesondere in folgenden Bereichen vorgesehen: Anlagenbau (bspw. chemische oder pharmazeutische Anlagen), Lebensmitteltechnik, Kesselbau (bspw. Druckkessel und Speicherkessel), Fördertechnik (bspw. Öl- und Gasförderung, Förderung sonstiger Medien), Pipelinebau (bspw. Öl- und Gaspipelines), Tieftemperaturanwendung (bspw. Gasverflüssigung, Flüssiggastransport, als Mantelmaterial für (Hochtemperatur-)Supraleiter, Kryotechnik), Fahrzeugbau (bspw. Nutzfahrzeuge, yellow goods), IHU-Anwendungen (bspw. Automobilbau, Anlagenbau).

### Bezugszeichenliste

1 Verbundrohr
2 Trägerrohr
3 Schutzrohr

## Patentansprüche

1. Verbundrohr bestehend aus einem Trägerrohr (2) und mindestens einem Schutzrohr (3), wobei das mindestens eine Schutzrohr (3) aus einem korrosionsbeständigen beziehungsweise korrosionsträgen Stahl hergestellt ist und bei dem das Trägerrohr (2) aus einem nicht korrosionsbeständigen Stahl hergestellt ist, der zumindest ein teilaustenitisches Gefüge aufweist und der bei Einwirkung mechanischer Spannungen einen TRIP- und/oder TWIP-Effekt aufweist, wobei der Stahl des Trägerrohres (2) aus folgender chemischer Zusammensetzung in Gew.-% besteht:
C: 0,005 bis 1,4
Mn: 5 bis 35
Rest Eisen einschließlich unvermeidbarer stahlbegleitender Elemente, mit optionaler Zulegierung folgender Elemente, in Gew.-% :
Ni: 0 bis 6, bevorzugt 1 bis 4
Cr: 0 bis 9, bevorzugt 0,5 bis 5
Al: 0 bis 15, bevorzugt 0,5 bis 11
Si: 0 bis 8, bevorzugt 0,3 bis 5
Mo: 0 bis 3, bevorzugt 0,01 bis 1,8
Cu: 0 bis 4, bevorzugt 0,005 bis 3
V: 0 bis 2, bevorzugt 0,004 bis 1
Nb: 0 bis 2, bevorzugt 0,004 bis 1
Ti: 0 bis 2, bevorzugt 0,005 bis 1,2
Sb: 0 bis 0,5, bevorzugt 0,003 bis 0,2
B: 0 bis 0,5, bevorzugt 0,0003 bis 0,1
Co: 0 bis 5, bevorzugt 0,01 bis 3
W: 0 bis 3, bevorzugt 0,1 bis 2
Zr: 0 bis 4, bevorzugt 0,005 bis 2
Ca: 0 bis 0,1
P: 0 bis 0,6, bevorzugt 0,0005 bis 0,1
S: 0 bis 0,2
N: 0,002 bis 0,3, bevorzugt 0,004 bis 0,2.

2. Verbundrohr bestehend aus einem Trägerrohr (2) und mindestens einem Schutzrohr (3), wobei das mindestens eine Schutzrohr (3) aus einem korrosionsbeständigen beziehungsweise korrosionsträgen Stahl hergestellt ist, bei dem das Trägerrohr (2) aus einem nicht korrosionsbeständigen Stahl hergestellt ist, der zumindest ein teilaustenitisches Gefüge aufweist und der bei Einwirkung mechanischer Spannungen einen TRIP- und/oder TWIP-Effekt aufweist, wobei der Stahl des Trägerrohres (2) aus folgender chemischer Zusammensetzung in Gew.-% besteht:
C: 0,005 bis 0,9, bevorzugt 0,01 bis < 0,3
Mn: mehr als 4,0 bis 12, bevorzugt 4 bis 8
Rest Eisen einschließlich unvermeidbarer stahlbegleitender Elemente, mit optionaler Zulegierung von einem oder mehreren der folgenden Elemente, in Gew.-% :
Al: 0 bis 10, bevorzugt 0,03 bis 0,8
Si: 0 bis 6, bevorzugt 0,02 bis 0,8
Cr: 0 bis 6, bevorzugt 0,05 bis 4
Nb: 0 bis 1,5, bevorzugt 0,003 bis 0,1
V: 0 bis 1,5, bevorzugt 0,006 bis 0,1
Ti: 0 bis 1,5, bevorzugt 0,002 bis 0,5
Mo: 0 bis 3, bevorzugt 0,01 bis 0,8
Cu: 0 bis 3, bevorzugt 0,05 bis 2
Sn: 0 bis 0,5
W: 0 bis 5, bevorzugt 0,03 bis 2
Co: 0 bis 8, bevorzugt 0,003 bis 3
Zr: 0 bis 1, bevorzugt 0,03 bis 0,5
B: 0 bis 0,15, bevorzugt 0,002 bis 0,02
P: max. 0,1, insbesondere < 0,04
S: max. 0,1, insbesondere < 0,02
N: max. 0,1, insbesondere < 0,05
Ca: bis 0,1.

3. Verbundrohr nach mindestens einem der Ansprüche 1 und 2, **dadurch gekennzeichnet, dass** das Trägerrohr (2) eine Zugfestigkeit von mindestens 800 MPa und eine Bruchdehnung von mindestens 15 % aufweist.

4. Verbundrohr nach mindestens einem der Ansprüche 1 bis 3, **dadurch gekennzeichnet, dass** das Trägerrohr (2) aus einem Stahl hergestellt ist, der ein Gefüge mit einem Austenitgehalt von 5 bis 100 % aufweist.

5. Verbundrohr nach mindestens einem der Ansprüche 1 bis 4, **dadurch gekennzeichnet, dass** das mindestens eine Schutzrohr (3) zumindest ein teilaustenitisches Gefüge und bei Einwirkung mechanischer Spannungen einen TRIP- und/oder TWIP-Effekt aufweist.

6. Verbundrohr nach mindestens einem der Ansprüche 1 bis 5, **dadurch gekennzeichnet, dass** das mindestens eine Schutzrohr (3) ein vollaustenitisches Gefüge aufweist.

7. Verbundrohr nach mindestens einem der Ansprüche 1 bis 6, **dadurch gekennzeichnet, dass** das Schutzrohr (3) aus einem korrosionsbeständigen beziehungsweise korrosionsträgen Stahl mit folgender chemischer Zusammensetzung Gew.-% hergestellt ist:
C: 0,005 bis 0,8
Cr: 7 bis 30
Rest Eisen einschließlich unvermeidbarer stahlbegleitender Elemente, mit optionaler Zulegierung folgender Elemente, in Gew.-% :
Ni: 0 bis 15
Mn: 0 bis 25
Al: 0 bis 15
Si: 0 bis 8
Mo: 0,01 bis 3
Cu: 0,005 bis 4
V: 0 bis 2
Nb: 0 bis 2
Ti: 0 bis 2
Sb: 0 bis 0,5
B: 0 bis 0,5
Co: 0 bis 5
W: 0 bis 3
Zr: 0 bis 4
Ca: 0 bis 0,1
P: 0 bis 0,6
S: 0 bis 0,2
N: 0,002 bis 0,3.

8. Verbundrohr nach mindestens einem der Ansprüche 1 bis 6, **dadurch gekennzeichnet, dass** das Schutzrohr (3) aus einem korrosionsbeständigen beziehungsweise korrosionsträgen Stahl mit folgender chemischer Zusammensetzung Gew.-% hergestellt ist:
Cr: 7 bis 20
Mn: 2 bis 9
Ni: bis zu 9
C: 0,005 bis 0,4
N: 0,002 bis 0,3
Rest Eisen einschließlich unvermeidbarer stahlbegleitender Elemente, mit optionaler Zulegierung folgender Elemente, in Gew.-% :
Al: 0 bis 3
Si: 0 bis 2
Mo: 0,01 bis 3
Cu: 0,005 bis 4
V: 0 bis 2
Nb: 0 bis 2
Ti: 0 bis 2
Sb: 0 bis 0,5
B: 0 bis 0,5
Co: 0 bis 5
W: 0 bis 3
Zr: 0 bis 2
Ca: 0 bis 0,1
P: 0 bis 0,6
S: 0 bis 0,2.

9. Verbundrohr nach mindestens einem der Ansprüche 1 bis 6, **dadurch gekennzeichnet, dass** das Schutzrohr (3) aus einem korrosionsbeständigen beziehungsweise korrosionsträgen Stahl mit folgender chemischer Zusammensetzung in Gew.-% hergestellt ist:
Mn: 5 bis 30
C: 0.01 bis 0.8
Al: 4 bis 10
Cr: 2 bis 10
Si: 0 bis 3.5
Rest Eisen einschließlich unvermeidbarer stahlbegleitender Elemente, mit optionaler Zulegierung folgender Elemente, in Gew.-% :
Co: 0 bis 5
W: 0 bis 3
Ca: 0 bis 0,1
P: 0 bis 0,6
S: 0 bis 0,2
Cu: 0,005 bis 4
Sb: 0 bis 0,5
sowie optional jeweils bis zu 1 Gew.-% eines oder mehrerer Elemente aus der Gruppe der folgenden Elemente: Zr, Ti, V, Nb, B, Mo, Ni, N, seltene Erden.

10. Verfahren zur Herstellung eines Verbundrohrs (1) bestehend aus einem Trägerrohr (2) und mindestens einem Schutzrohr (3), unter Verwendung eines Verbundrohrs (1) nach mindestens einem der Ansprüche 1 bis 9, **dadurch gekennzeichnet, dass** das Trägerrohr (2) und das mindestens eine Schutzrohr (3) mechanisch oder metallurgisch miteinander verbunden werden.

11. Verfahren nach Anspruch 10, **dadurch gekennzeichnet, dass** das Trägerrohr (2) im Verbund mit mindestens einem Schutzrohr (3), insbesondere durch Innenhochdruckumformen, umgeformt wird.

## Claims

1. Composite pipe consisting of a carrier pipe (2) and at least one protective pipe (3), wherein the at least one protective pipe (3) is made of a corrosion-resistant steel or weathering steel and the carrier pipe (2) is made of a non-corrosion-resistant steel which has at least one partially austenitic structure and has a TRIP and/or TWIP effect under the action of mechanical stresses, wherein the steel of the carrier pipe (2) consists of the following chemical composition in wt.%:
C: 0.005 to 1.4
Mn: 5 to 35
with the remainder being iron, including unavoidable steel-accompanying elements, with the optional addition of the following elements, in wt.%:
Ni: 0 to 6, preferably 1 to 4
Cr: 0 to 9, preferably 0.5 to 5
AI: 0 to 15, preferably 0.5 to 11
Si: 0 to 8, preferably 0.3 to 5
Mo: 0 to 3, preferably 0.01 to 1.8
Cu: 0 to 4, preferably 0.005 to 3
V: 0 to 2, preferably 0.004 to 1
Nb: 0 to 2, preferably 0.004 to 1
Ti: 0 to 2, preferably 0.005 to 1.2
Sb: 0 to 0.5, preferably 0.003 to 0.2
B: 0 to 0.5, preferably 0.0003 to 0.1
Co: 0 to 5, preferably 0.01 to 3
W: 0 to 3, preferably 0.1 to 2
Zr: 0 to 4, preferably 0.005 to 2
Ca: 0 to 0.1
P: 0 to 0.6, preferably 0.0005 to 0.1
S: 0 to 0.2
N: 0.002 to 0.3, preferably 0.004 to 0.2.

2. Composite pipe consisting of a carrier pipe (2) and at least one protective pipe (3), wherein the at least one protective pipe (3) is made of a corrosion-resistant steel or weathering steel and the carrier pipe (2) is made of a non-corrosion-resistant steel which has at least one partially austenitic structure and has a TRIP and/or TWIP effect under the action of mechanical stresses, wherein the steel of the carrier pipe (2) consists of the following chemical composition in wt.%:
C: 0.005 to 0.9, preferably 0.01 to 0.3
Mn: more than 4.0 to 12, preferably 4 to 8
with the remainder being iron, including unavoidable steel-accompanying elements, with the optional addition of one or more of the following elements in wt.%:
Al: 0 to 10, preferably 0.03 to 0.8
Si: 0 to 6, preferably 0.02 to 0.8
Cr: 0 to 6, preferably 0.05 to 4
Nb: 0 to 1.5, preferably 0.003 to 0.1
V: 0 to 1.5, preferably 0.006 to 0.1
Ti: 0 to 1.5, preferably 0.002 to 0.5
Mo: 0 to 3, preferably 0.01 to 0.8
Cu: 0 to 3, preferably 0.05 to 2
Sn: 0 to 0.5
W: 0 to 5, preferably 0.03 to 2
Co: 0 to 8, preferably 0.003 to 3
Zr: 0 to 1, preferably 0.03 to 0.5
B: 0 to 0.15, preferably 0.002 to 0.02
P: max. 0.1, in particular <0.04
S: max. 0.1, in particular <0.02
N: max. 0.1, in particular <0.05
Ca: up to 0.1.

3. Composite pipe according to at least one of claims 1 and 2, **characterised in that** the carrier pipe (2) has a tensile strength of at least 800 MPa and an elongation at fracture of at least 15%.

4. Composite pipe according to at least one of claims 1 to 3, **characterised in that** the carrier pipe (2) is made of a steel which has a structure having an austenite content of 5 to 100%.

5. Composite pipe according to at least one of claims 1 to 4, **characterised in that** the at least one protective pipe (3) has at least one partially austenitic structure and has a TRIP and/or TWIP effect under the action of mechanical stresses.

6. Composite pipe according to at least one of claims 1 to 5, **characterised in that** the at least one protective pipe (3) has a fully austenitic structure.

7. Composite pipe according to at least one of claims 1 to 6, **characterised in that** the protective pipe (3) is made of a corrosion-resistant steel or weathering steel having the following chemical composition in wt.%:
C: 0.005 to 0.8
Cr: 7 to 30
with the remainder being iron, including unavoidable steel-accompanying elements, with the optional addition of the following elements, in wt.%:
Ni: 0 to 15
Mn: 0 to 25
AI: 0 to 15
Si: 0 to 8
Mo: 0.01 to 3
Cu: 0.005 to 4
V: 0 to 2
Nb: 0 to 2
Ti: 0 to 2
Sb: 0 to 0.5
B: 0 to 0.5
Co: 0 to 5
W: 0 to 3
Zr: 0 to 4
Ca: 0 to 0.1
P: 0 to 0.6
S: 0 to 0.2
N: 0.002 to 0.3.

8. The composite pipe according to at least one of claims 1 to 6, **characterised in that** the protective pipe (3) is made of a corrosion-resistant steel or weathering steel having the following chemical composition in wt.%:
Cr: 7 to 20
Mn: 2 to 9
Ni: up to 9
C: 0.005 to 0.4
N: 0.002 to 0.3
with the remainder being iron, including unavoidable steel-accompanying elements, with the optional addition of the following elements, in wt.%:
Al: 0 to 3
Si: 0 to 2
Mo: 0.01 to 3
Cu: 0.005 to 4
V: 0 to 2
Nb: 0 to 2
Ti: 0 to 2
Sb: 0 to 0.5
B: 0 to 0.5
Co: 0 to 5
W: 0 to 3
Zr: 0 to 2
Ca: 0 to 0.1
P: 0 to 0.6
S: 0 to 0.2.

9. The composite pipe according to at least one of claims 1 to 6, **characterised in that** the protective pipe (3) is made of a corrosion-resistant steel or weathering steel having the following chemical composition in wt.%:
Mn: 5 to 30
C: 0.01 to 0.8
AI: 4 to 10
Cr: 2 to 10
Si: 0 to 3.5
with the remainder being iron, including unavoidable steel-accompanying elements,
with the optional addition of the following elements, in wt.%:
Co: 0 to 5
W: 0 to 3
Ca: 0 to 0.1
P: 0 to 0.6
S: 0 to 0.2
Cu: 0.005 to 4
Sb: 0 to 0.5
and optionally in each case up to 1 wt.% of one or more elements from the group of the following elements: Zr, Ti, V, Nb, B, Mo, Ni, N, rare earths.

10. Method for producing a composite pipe (1) consisting of a carrier pipe (2) and at least one protective pipe (3), using a composite pipe (1) according to at least one of claims 1 to 9, **characterised in that** the carrier pipe (2) and the at least one protective pipe (3) are mechanically or metallurgically connected to one another.

11. Method according to claim 10, **characterised in that** the carrier pipe (2) is formed in combination with at least one protective tube (3), in particular by means of internal high-pressure forming.

## Revendications

1. Tube composite comprenant un tube de support (2) et au moins un tube de protection (3), l'au moins un tube de protection (3) étant réalisé à partir d'un acier résistant à la corrosion ou inerte à la corrosion et le tube de support (2) étant réalisé à partir d'un acier non résistant à la corrosion qui comporte au moins une structure partiellement austénitique et qui présente un effet TRIP et/ou TWIP lorsqu'il est exposé à des contraintes mécaniques, l'acier du tube de support (2) ayant la composition chimique suivante en % en poids:
C: 0,005 à 1,4
Mn: 5 à 35
le reste étant du fer incluant des éléments inévitables liés à l'acier, avec ajout facultatif des éléments suivants en % en poids:
Ni: 0 à 6, de préférence 1 à 4
Cr: 0 à 9, de préférence 0,5 à 5
Al: 0 à 15, de préférence 0,5 à 11
Si: 0 à 8, de préférence 0,3 à 5
Mo: 0 à 3, de préférence 0,01 à 1,8
Cu: 0 à 4, de préférence 0,005 à 3
V: 0 à 2, de préférence 0,004 à 1
Nb: 0 à 2, de préférence 0,004 à 1
Ti: 0 à 2, de préférence 0,005 à 1,2
Sb: 0 à 0,5, de préférence 0,003 à 0,2
B: 0 à 0,5, de préférence 0,0003 à 0,1
Co: 0 à 5, de préférence 0,01 à 3
W: 0 à 3, de préférence 0,1 à 2
Zr: 0 à 4, de préférence 0,005 à 2
Ca: 0 à 0,1
P: 0 à 0,6, de préférence 0,0005 à 0,1
S: 0 à 0,2
N: 0,002 à 0,3, de préférence 0,004 à 0,2.

2. Tube composite comprenant un tube de support (2) et au moins un tube de protection (3), l'au moins un tube de protection (3) étant réalisé à partir d'un acier résistant à la corrosion ou inerte à la corrosion, le tube de support (2) étant réalisé à partir d'un acier non résistant à la corrosion qui comporte au moins une structure partiellement austénitique et qui présente un effet TRIP et/ou TWIP lorsqu'il est exposé à des contraintes mécaniques,
l'acier du tube de support (2) ayant la composition chimique suivante en % en poids :
C: 0,005 à 0,9, de préférence 0,01 à < 0,3
Mn: plus de 4,0 à 12, de préférence 4 à 8
le reste étant du fer comprenant les éléments inévitables liés à l'acier, avec ajout facultatif d'un ou plusieurs des éléments suivants en % en poids:
Al: 0 à 10, de préférence 0,03 à 0,8
Si: 0 à 6, de préférence 0,02 à 0,8
Cr: 0 à 6, de préférence 0,05 à 4
Nb: 0 à 1,5, de préférence 0,003 à 0,1
V: 0 à 1,5, de préférence 0,006 à 0,1
Ti: 0 à 1,5, de préférence 0,002 à 0,5
Mo: 0 à 3, de préférence 0,01 à 0,8
Cu: 0 à 3, de préférence 0,05 à 2
Sn: 0 à 0,5
W: 0 à 5, de préférence 0,03 à 2
Co: 0 à 8, de préférence 0,003 à 3
Zr: 0 à 1, de préférence 0,03 à 0,5
B: 0 à 0,15, de préférence 0,002 à 0,02
P: max 0,1, notamment < 0,04
S: max. 0,1, notamment < 0,02
N: max. 0,1, notamment < 0,05
Ca: jusqu'à 0,1.

3. Tube composite selon l'une au moins des revendications 1 et 2, **caractérisé en ce que** le tube de support (2) présente une résistance à la traction d'au moins 800 MPa et un allongement à la rupture d'au moins 15 %.

4. Tube composite selon l'une au moins des revendications 1 à 3, **caractérisé en ce que** le tube de support (2) est réalisé à partir d'un acier qui comporte une structure ayant une teneur en austénite de 5 à 100 %.

5. Tube composite selon l'une au moins des revendications 1 à 4, **caractérisé en ce que** l'au moins un tube de protection (3) comporte au moins une structure partiellement austénitique et présente un effet TRIP et/ou TWiP lorsqu'il est exposé à des contraintes mécaniques.

6. Tube composite selon l'une au moins des revendications 1 à 5, **caractérisé en ce que** l'au moins un tube de protection (3) comporte une structure entièrement austénitique.

7. Tube composite selon l'une au moins des revendications 1 à 6, **caractérisé en ce que** le tube de protection (3) est réalisé à partir d'un acier résistant à la corrosion ou inerte à la corrosion de composition chimique suivante en % en poids:
C: 0,005 à 0,8
Cr: 7 à 30
le reste étant du fer incluant les éléments inévitables liés à l'acier, avec ajout facultatif des éléments suivants en % en poids :
Ni: 0 à 15
Mn: 0 à 25
Al: 0 à 15
Si: 0 à 8
Mo: 0,01 à 3
Cu: 0,005 à 4
V: 0 à 2
Nb: 0 à 2
Ti: 0 à 2
Sb: 0 à 0,5
B: 0 à 0,5
Co: 0 à 5
W: 0 à 3
Zr: 0 à 4
Ca: 0 à 0,1
P: 0 à 0,6
S: 0 à 0,2
N: 0,002 à 0,3.

8. Tube composite selon l'une au moins des revendications 1 à 6, **caractérisé en ce que** le tube de protection (3) est réalisée à partir d'un acier résistant à la corrosion ou inerte à la corrosion de composition chimique suivante en % en poids :
Cr: 7 à 20
Mn: 2 à 9
Ni: jusqu'à 9
C: 0,005 à 0,4
N: 0,002 à 0,3
le reste étant du fer incluant les éléments inévitables liés à l'acier, avec ajout facultatif des éléments suivants en % en poids:
Al: 0 à 3
Si: 0 à 2
Mo: 0,01 à 3
Cu: 0,005 à 4
V: 0 à 2
Nb: 0 à 2
Ti: 0 à 2
Sb: 0 à 0,5
B: 0 à 0,5
Co: 0 à 5
W: 0 à 3
Zr: 0 à 2
Ca: 0 à 0,1
P: 0 à 0,6
S: 0 à 0,2.

9. Tube composite selon l'une au moins des revendications 1 à 6, **caractérisé en ce que** le tube de protection (3) est réalisé à partir d'un acier résistant à la corrosion ou inerte à la corrosion de composition chimique suivante en % en poids:
Mn: 5 à 30
C: 0,01 à 0,8
Al: 4 à 10
Cr: 2 à 10
Si: 0 à 3,5
le reste étant du fer incluant les éléments inévitables liés à l'acier, avec ajout facultatif des éléments suivants en % en poids:
Co: 0 à 5
W: 0 à 3
Ca: 0 à 0,1
P: 0 à 0,6
S: 0 à 0,2
Cu: 0,005 à 4
Sb: 0 à 0,5
et éventuellement à chaque fois jusqu'à 1 % en poids d'un ou plusieurs éléments du groupe comprenant les éléments suivants : Zr, Ti, V, Nb, B, Mo, Ni, N, terres rares.

10. Procédé de production d'un tube composite (1) comprenant un tube de support (2) et au moins un tube de protection (3), à l'aide d'un tube composite (1) selon l'une au moins des revendications 1 à 9, caractérisé en que le tube de support (2) et l'au moins un tube de protection (3) sont reliés l'un à l'autre par des moyens mécaniques ou métallurgiques.

11. Procédé selon la revendication 10, **caractérisé en ce que** le tube de support (2) est formé en combinaison avec au moins un tube de protection (3), notamment par formage sous haute pression interne.
